(19)

**Europäisches Patentamt**
**European Patent Office**
**Office européen des brevets**

(11) **EP 4 109 087 A1**

(12) **EUROPEAN PATENT APPLICATION**

(43) Date of publication:
**28.12.2022 Bulletin 2022/52**

(21) Application number: **21180597.3**

(22) Date of filing: **21.06.2021**

(51) International Patent Classification (IPC):
**G01N 27/80** (2006.01)    **G01N 27/9013** (2021.01)

(52) Cooperative Patent Classification (CPC):
**G01N 27/9026; G01N 27/80**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NV Bekaert SA**
**8550 Zwevegem (BE)**

(72) Inventor: **MESPLONT, Christophe**
**8550 Zwevegem (BE)**

(54) **DEVICE FOR IN-LINE MONITORING THE ROOM TEMPERATURE MICROSTRUCTURE VARIATIONS**

(57)    A device (100) for in-line monitoring the microstructure variations of a thermally processed steel wire at temperatures below 100 °C. The device (100) comprises:
- a magnetic sensor (102);
- a reference unit (104);
- a calculation unit (106).

The magnetic sensor (102) is adapted to be positioned around the thermally processed steel wire and comprises a first induction coil (110) to generate an electromagnetic signal and a second induction coil (112) to receive an electromagnetic signal as currently measured value.

The reference unit (104) contains or produces a set of reference measured values of thermally processed reference steel wire samples with fully identified room temperature microstructure.

The calculation unit (106) is able to make a difference between the currently measured value and the reference measured values in order to return type and amplitude of microstructure deviation from the reference steel wire.

Fig. 1

EP 4 109 087 A1

**Description**

**Technical Field**

The invention relates to a device for in-line monitoring the room temperature microstructure variations of a thermally processed steel wire

**Background Art**

During the production cycle of a steel wire, one or more heat treatments are necessary. Each heat treatment step is designed to obtain a particular microstructure, which is conferring the steel wire its mechanical properties.

As an example, a patenting treatment is applied to obtain homogeneous fine pearlite microstructure because this specific microstructure offers the best deformability during the further drawing step.

As another example, a quenching and tempering treatment is applied to obtain tempered martensite because this microstructure provides high yield stress for e.g. spring wires for dynamic applications.

The mechanical properties of a heat-treated steel wire are usually measured at the start and at the end of the heat treatment step, by means of destructive tensile testing. Wire samples need to be cut out of the produced coil before being measured. Hence the measured values are not representative for the full length of the heat-treated steel wire.

The final microstructure can only be checked long after the steel wire has been heat treated, because sample preparation is time consuming. Moreover, possible variations of microstructure within the length of the heat treated wire can not be detected.

Prior art provides some techniques to monitor microstructure of sheet and strip steels during the phase transformation from austenite.

EP0177626A1 describes a system for online-detecting transformation value and/or flatness of steel or magnetic material. When the steel begins to transform from gamma phase to alpha phase and a paramagnetic alpha phase precipitates, the alpha phase is magnetized, fluctuations are caused to the intensity of magnetic field of the steel.

GB2490393A describes a system for monitoring a microstructure of a metal target comprising a plurality of electromagnetic sensors arranged to determine a phase change between the output magnetic field and the resultant magnetic field at each of a plurality of frequencies forming the multi-frequency waveform for each of the sensors, and to determine a microstructure of a metal target at the plurality of electromagnetic sensors based on the phase changes.

US20190292624A1 describes a device and method for determining the microstructure of a metal product using X-rays. To allow reliable determination of the microstructure of a metal product during the metallurgical production thereof, the device includes at least one cooling installation for actively cooling the accommodating chamber.

All of those systems require one or more sensors, that need to be installed at a position where the magnetic transformation happens in order to detect a significant change of the magnetic or X-ray signal. The temperature at which the paramagnetic to ferromagnetic transformation starts is usually the temperature at which the decomposition of austenite starts during cooling. The range of temperature at which the phase transformation takes place (between 250°C and 700°C depending on the microstructure) makes it necessary for the measuring device to be cooled.

In many heat treatment processes for steel wire, none of the above systems would be suitable, due to space constraint, or complexity when producing wires of different chemical compositions and diameters, which have different phase transformation temperatures. A typical case where none of the existing devices would work is wire patenting with lead, because the phase transformation takes place in the lead bath.

**Disclosure of Invention**

It is a general object of the invention to provide a device for in-line monitoring the room temperature microstructure variations of a thermally processed steel wire. The microstructure can be described by its content in volume fraction of different micro constituents. In thermally treated steel wires micro constituents can be austenite, ferrite, bainite and martensite. More detailed description of microstructure may include all usual features observed by means of light optical microscopy and scanning electron microscopy in steel. This includes but is not limited to: the average distance between cementite lamellae in pearlite (inter lamellar spacing), the austenite grain size, the ferrite grain size, the pearlite nodule or colony size, the rate of ferrite recrystallization, the type of bainite (upper, lower, granular), the state of martensite (lath, plate, untempered, tempered).

It is another object of the invention to provide a device for in-line monitoring the room temperature mechanical property variations of a thermally processed steel wire. Mechanical properties refer to the values measured during a tensile test according to the standard method (DIN EN ISO 6892-1, ASTM E8 - Tensile Testing on Metals at Room Temperature), i.e. yield stress, tensile strength, uniform elongation and total elongation. Another mechanical property can be the hardness or microhardness such as described in standards (ASTM E384 Standard Test Method for Microindentation Hardness of Materials), or its conversion according to EN ISO 18265.

The major advantage of the invention is that it gives instantaneously the microstructure and the mechanical property variations versus the target, during the full production time, i.e. for the total length of a heat treated steel wire. Currently, microstructure characterization and mechanical testing are only done at the start and the end of production, meaning that any deviation from the target during production can not be detected.

The subject-matter of the invention is a device for in-line monitoring the microstructure variations of a thermally processed steel wire at temperatures below 100 °C, the device comprising:

The device is comprising three parts:

- a magnetic sensor;
- a reference unit;
- a calculation unit.

the magnetic sensor adapted to be positioned around the thermally processed steel wire and comprising a first induction coil to generate an electromagnetic signal and a second induction coil to receive an electromagnetic signal as currently measured value;

the reference unit containing or producing a set of reference measured values of thermally processed reference steel wire samples with fully identified room temperature microstructure;

a calculation unit able to make a difference between the currently measured value and the reference measured values in order to return type and amplitude of microstructure deviation from the reference steel wire.

The magnetic sensor can be of any type used in non destructive technique devices, such as magnetic Barkhausen noise analysis (MBN), magneto-acoustic emission (MAE), and eddy current testing. Preferably, the magnetic sensor is of the type used in eddy current testing (ECT). The magnetic sensor contains a first induction coil to generate an electromagnetic signal and a second induction coil to receive an electromagnetic signal as currently measured value. The first induction coil to generate an electromagnetic signal and the second induction coil to receive an electromagnetic signal as currently measured value do not need to be separated and can be embedded in the same part, for instance a double induction coil. The magnetic sensor is adapted to be positioned around the thermally processed steel wire. Preferably, the magnetic sensor is positioned at the end of the thermal processing line, where the heat treated wire has cooled below 100°C, i.e. where the phase transformation is completed. The magnetic sensor may be connected to a data acquisition device. The electromagnetic signal as currently measured value can be sent to a calculation unit via the data acquisition device.

The reference unit is containing or producing a set of reference measured values of thermally processed reference steel wire samples with fully identified room temperature microstructure. The reference unit thus preferably contains the target microstructure and target mechanical properties to be compared with the measured production wire. The reference unit can be a second magnetic sensor comprising a third induction coil to generate a reference electromagnetic signal and a fourth induction coil to receive the reference magnetic signal, in which a non-moving reference sample of known microstructure is placed. The reference unit can be a database containing values of electromagnetic signal previously measured for reference samples of known microstructure.

The calculation unit is able to make a difference between the currently measured value and the reference measured values in order to return type and amplitude of microstructure deviation from the reference steel wire. Preferably, the calculation unit is a computer assisted model able to predict the amplitude and type of any microstructure variation from the difference between the currently measured value and the reference measured values.

The computer assisted model can also be able to predict mechanical property variation from the difference between the currently measured value and the reference measured values. Mechanical properties can be the yield stress in $N/mm^2$, the tensile strength in $N/mm^2$, the uniform elongation, the total elongation or the hardness.

The device can be used for monitoring the room temperature microstructure and/or mechanical property variations in a wire patenting process.

The device can also be used for monitoring the room temperature microstructure and/or mechanical property variations in a wire quenching and tempering process.

The device can also be used for monitoring the room temperature microstructure and/or mechanical property variations in a wire annealing process.

**Brief Description of Figures in the Drawings**

Fig. 1 is a schematic representation of the invention.
Fig. 2 is a graph illustrating microstructure or tensile strength deviation from the target during steel wire heat treatment.

Fig. 3 is a plot of normalized reactance as a function of normalized resistance for several microstructures obtained by means of heat treating in different conditions an AISI 1080 steel wire with 4mm diameter.

Fig. 4 is a plot of normalized reactance as a function of normalized resistance for different pearlite inter lamellar spacing (ILS) obtained by means of patenting an AISI 1080 steel wire with 4mm diameter in molten lead at different temperatures.

Fig. 5 is a series of plots showing relations between mechanical properties (yield stress, tensile strength, total elongation and Vickers hardness) and the total voltage of a measured magnetic signal.

**Mode(s) for Carrying Out the Invention**

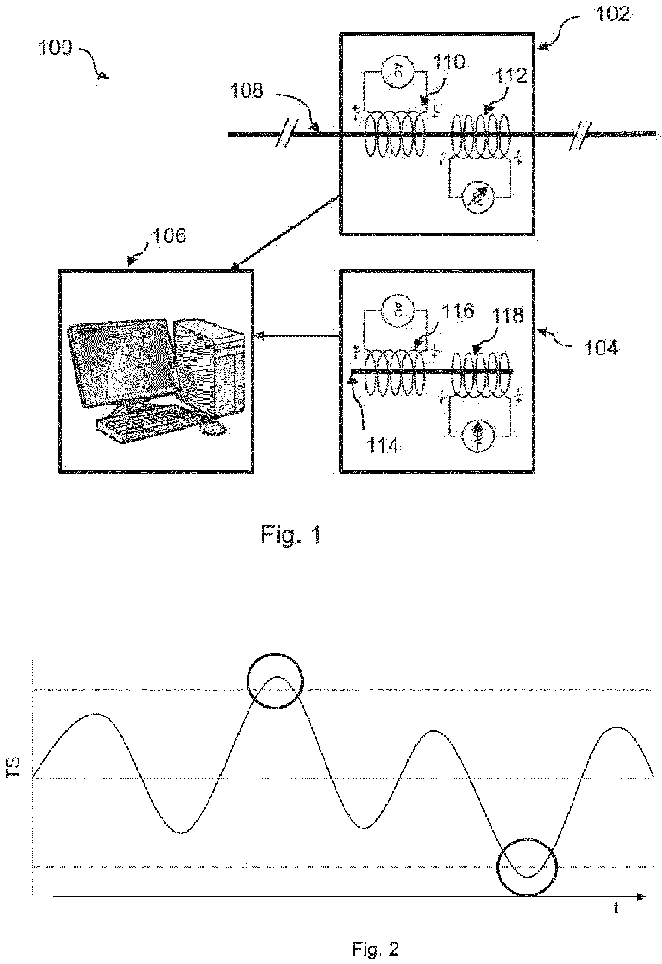

A schematic representation of the invention is shown in Fig. 1. A device 100 for in-line monitoring the room temperature microstructure variations of a thermally processed steel wire is represented, the device comprising:

- a magnetic sensor 102;
- a reference unit 104,106;
- a calculation unit 106;

The magnetic sensor 102 is adapted to be positioned around the thermally processed steel wire 108 (said wire is not part of the invention) and comprises a first induction coil 110 to generate an electromagnetic signal and a second induction coil 112 to receive an electromagnetic signal as currently measured value;

The reference unit containing or producing a set of reference measured values of thermally processed reference steel wire samples with fully identified room temperature microstructure can be a database stored in a computer 106; Alternatively, the reference unit is a second magnetic sensor 104 comprising a third induction coil 116 to generate a reference electromagnetic signal and a fourth induction coil 118 to receive the reference magnetic signal, in which a non-moving reference sample 114 of known microstructure is placed.

A calculation unit, for instance a computer assisted model 106 is able to make a difference between the currently measured value and the reference measured values in order to return type and amplitude of microstructure deviation from the reference steel wire.

Fig. 2 is a graph illustrating the problem solved by the invention. During standard production of steel wire on a heat treatment line, the microstructure and mechanical properties can only be measured on samples collected at the start and at the end of the production lot. It is not possible to collect samples during or even after production without affecting the integrity of the lot, because the wire length would be reduced and would become too short for further processing. As a consequence, any microstructure or tensile property variation below the lower control limit (LCL) or above the upper control limit (UCL) can not be detected. In Fig. 2 the variation of tensile strength (TS) as a function of the time (t) is illustrated. The purpose of the present invention is to monitor the variation of TS with t. Additionally, an alarm can be triggered if the variation exceeds the control limits represented as dotted lines in Fig. 2. The examples below illustrate how the invention is used to solve this problem in three different cases.

In the following examples the magnetic sensor is an eddy current sensor. The eddy current testing method is based on the analysis of changes in the impedance of a coil placed around the test specimen caused by the generation of electrical currents in the test specimen when subjected to a time-varying magnetic field. This technique utilizes the intrinsic electromagnetic properties of the steels for non-destructive evaluation of microstructural changes and mechanical properties. Referring to Fig. 1 the first induction coil 110 to generate an electromagnetic signal and the second induction coil 112 to receive an electromagnetic signal as currently measured value are designed such that the fill-factor between the encircling coil and the wire section is at least 50%, e.g. at least 70%. The frequency is chosen such that the skin depth, i.e. the penetration depth of eddy currents into the wire is between 1% and 50% of the wire diameter, e.g. between_10% and 40%.. The standard depth of penetration $\delta$, or skin depth, is defined as the depth at which eddy current density decreases to $e^{-1}$ (i.e., 36.8%). It depends on the material's electric conductivity and magnetic permeability, and the test frequency, as follows:

$$\delta(mm) = \frac{1}{\sqrt{\pi f \mu \sigma}} = \sqrt{\frac{\rho}{\pi f \mu}} \qquad (1)$$

with the units of $\sigma$ in S.mm-1, $\rho$ in $\Omega$.mm, $\mu$ in H.mm-1 and f in Hz. Table 1 shows some calculation results for the eddy current device used in the following examples.

Table 1. Effective skin depth as a function of the test frequency calculated for the eddy current magnetic sensor used in the following examples

| Test frequency (Hz) | Effective skin depth (mm) |
|---|---|
| 25 | 3,80 |
| 100 | 1,90 |
| 200 | 1,35 |
| 400 | 0,095 |
| 800 | 0,067 |
| 1600 | 0,048 |
| 3200 | 0,034 |

Still referring to Fig. 1 the signal measured by the second induction coil 112 is for instance the impedance Z, which can be decomposed into the resistance R and the inductive reactance $X_L$. The total voltage, $V_T$ is also obtained from the impedance:

$$Z = \frac{V_T}{I} = \sqrt{R^2 + X_L^2} \qquad (2)$$

With the resistance

$$R = \rho \frac{l}{A} \qquad (3)$$

and the inductive reactance

$$X_L = 2\pi f L \qquad (4)$$

The resistance is influenced by the electrical properties of the measured wire as it is linked with its electrical resistivity

$$\rho = \frac{1}{\sigma} \qquad (5)$$

, while the inductive reactance inductance is influenced by the magnetic properties of the measured wire as it is linked with its inductance

$$L = \mu \frac{N^2 A}{l}. \qquad (6)$$

*N, A, l* are related to the coil design and represent the number of turns, the area and the length, respectively.

In the following examples a 4mm diameter steel wire of a carbon content ranging from 0.65wt% to 0.85wt% (AISI1065 / AISI1080 / AISI1085) was subjected to different heat treatments. However, the present invention is suitable for steel wires of any diameter between 0.3mm and 20mm, e.g. between 1mm and 13mm.

Depending on the heat treatment, different steel compositions can be used. For example patenting is generally applied on plain carbon steels.

A plain carbon composition is along following lines (all percentages being percentages by weight):

a carbon content (% C) ranging from 0.60% to 1.20%, e.g. 0.80% to 1.1%;

a manganese content (% Mn) ranging from 0.10% to 1.0%, e.g. from 0.20% to 0.80%;
a silicon content (% Si) ranging from 0.10% to 1.50%, e.g. from 0.15% to 0.70%;
a sulphur content (% S) below 0.03%, e.g. below 0.01%;
a phosporus content (% P) below 0.03%, e.g. below 0.01%.

Annealing is preferably applied on low carbon steel. A low carbon steel composition has a carbon content ranging from 0.03% to 0.20%, e.g. from 0.04% to 0.1%.

In the case of the quenching and tempering heat treatment, the steel wires have a carbon content ranging from 0.20% to 0.80% and microalloying elements such as Cr, Si, or V are used to increase the hardenability, i.e. to favor the martensitic transformation.

For other steel compositions, e.g. with additions of chromium or vanadium, it is sufficient to complete the database or computer assisted model with reference data from same compositions or to put a reference sample with same composition in the third and fourth coil.

Example 1. Martensite and bainite detection in pearlitic steel wires.

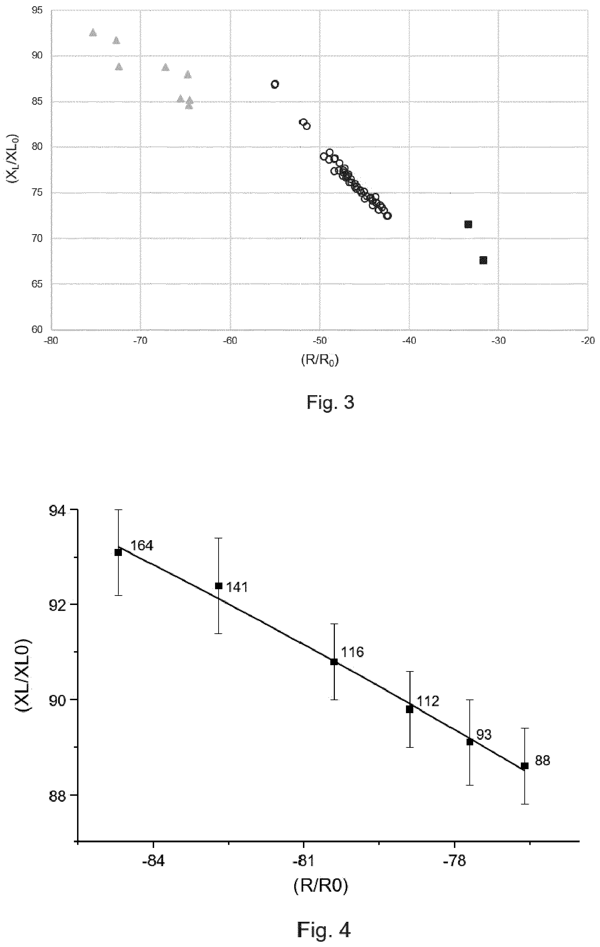

When a reference steel wire with known microstructure is measured by a magnetic sensor of the eddy current type, its magnetic characteristics can be reported in the complex impedance plan by plotting the inductive reactance as a function of the resistance. It was found that for a steel wire of a given chemical composition and diameter, each microstructure obtained by means of heat treatment was characterized by a $(R, X_L)$ point in the complex impedance plan. Fig. 3 shows the normalized reactance $(X_L/X_{L0})$ and resistance $(R/R_0)$ measured in a 4mm diameter AISI1080 steel wire with different microstructures. The normalized values were obtained by dividing the value of the signal measured by the eddy current induction coil 112 with a wire in it by the value of the signal measured by the eddy current induction coil 112 without a wire (empty coil).

The 4mm diameter AISI1080 steel wire has been reheated in electrical furnace under 75%H2/25%N2 protective atmosphere until 950°C or 1050°C to ensure full austenitization, then cooled following different cooling paths to obtain different microstructures. Ferrite-pearlite microstructures were obtained by isothermal quenching in molten lead bath at temperatures between 540°C and 700°C, bainitic microstructures were obtained by isothermal quenching in molten lead bath at temperatures between 380°C and 500°C, and martensitic microstructures were obtained by quenching to room temperature in cold water.

Microstructure characterization was done by light optical microscopy and the volume fraction of phases was measured according to ASTM E1245 - Standard Practice for Determining the Inclusion or Second-Phase Constituent Content of Metals by Automatic Image Analysis. The prior austenite grain size was measured according to ASTM E112.

In Fig. 3 ferrite/pearlite microstructures (with varying volume fractions of ferrite and pearlite) are represented with open circles, bainite obtained at diferent temperatures is represented with open triangles, and martensite is represented with solid squares.

Fig. 3 shows that the electromagnetic properties of the 4mm AISI1080 steel wire are directly linked to the microstructure. During a patenting process of 4mm AISI1080 steel wire the only desired microstructure is pearlite. Using a 4mm AISI1080 pearlitic wire with known microstructure as reference, the invention is able to monitor microstructure variations from this reference microstructure by comparing the measured signal and the reference signal. The calculation unit provides the user of the invention with information about the amplitude and direction of the microstructure variation. A direct application of the invention is the detection of the presence of bainite or martensite in the microstructure during the patenting process.

Example 2. Control of inter lamellar spacing in pearlite.

An AISI1080 steel wire with 4mm diameter was heated to 950°C or 1050°C, then isothermally quenched in molten lead at temperatures between 540°C and 640°C. The microstructure was fully pearlitic. The interlamellar spacing, i.e. the distance between 2 cementite lamellae was measured by means of analysing images obtained by scanning electron microscopy (SEM). SEM images were taken at magnification 7500x (scale= 80pixels/$\mu$m). Images were processed using an image analyse software (ImageJ). Images were binarized (made black-white) and skeletonized (all objects are made 1 pixel thick). Three circles were drawn and the amount of crossing was counted using the maxima on the intensity profile. The circle perimeter lengths was divided by the counts to obtain the mean random spacing. Finally the mean random spacing was divided by 2 to obtain the mean true spacing, or interlamellar spacing (ILS). The results of ILS measurements are reported in table 2. Each sample was measured by the magnetic sensor 3 (offline). Quantitative correlations were obtained between the interlamellar spacing and the eddy current signals. Fig. 4 shows that each sample represented by a solid square with the ILS value reported in nm, produced a distinct $(R/R_0, X_L/X_{L0})$ point in the complex impedance plan. During production of 4mm AISI1080, a reference sample of known ILS is placed in the reference sensor 104. The patented wire 108 runs continuously through the measuring sensor 102. The difference between the measured signal and the reference signal is analysed by the calculation unit 106 and the variation of interlamellar spacing is calculated for the full length of the production wire.

Table 2: True interlamellar spacing (ILS) of AISI 1080 steels patented at different transformation temperatures

| Austenitization temperature (°C) | Transformation temperature (°C) | True interlamellar spacing (nm) | | | |
|---|---|---|---|---|---|
| | | Mean | Standard deviation | 95% confidence interval | |
| | | | | Lower bound | Upper bound |
| 950 | 540 | 95.40 | 9.13 | 93.78 | 97.01 |
| 950 | 560 | 103.42 | 12.22 | 101.25 | 105.58 |
| 950 | 580 | 125.50 | 20.16 | 121.93 | 129.07 |
| 950 | 600 | 128.94 | 22.21 | 125.01 | 132.87 |
| 950 | 620 | 153.46 | 27.94 | 148.52 | 158.41 |
| 950 | 640 | 185.50 | 37.48 | 178.86 | 192.13 |
| 1050 | 540 | 88.32 | 17.39 | 81.14 | 95.50 |
| 1050 | 560 | 99.60 | 26.40 | 88.70 | 110.49 |
| 1050 | 580 | 121.00 | 28.78 | 109.12 | 132.89 |
| 1050 | 600 | 126.88 | 30.05 | 121.68 | 146.49 |
| 1050 | 620 | 150.61 | 22.80 | 141.20 | 160.02 |
| 1050 | 640 | 180.78 | 31.76 | 167.67 | 193.89 |

Example 3. Online monitoring of tensile property variations

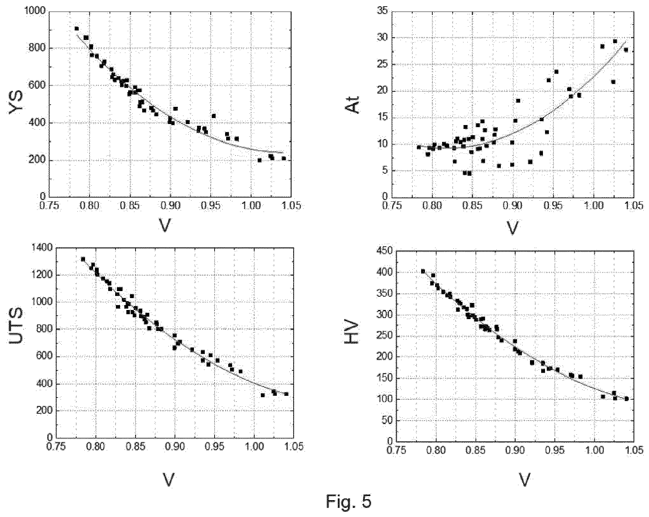

Patenting treatments were performed by austenitizing at 950°C and cooling at constant temperatures of 540, 560, 580, 600, 620, and 640°C in a lead bath for a few seconds several steel wires with 4mm diameter and different carbon contents, ranging from 0.03wt%C to 0.90wt%C. It resulted in ferrite-pearlite steels with various pearlite fractions, interlamellar spacing, and strengths. Magnetic measurements were performed in-situ and offline and correlations between the mean total voltage V and mechanical properties, i.e. the Yield Stress (YS) in $N/mm^2$, the total elongation (At) in %, the Ultimate Tensile Strength (UTS) in $N/mm^2$ and the Vickers hardness number (HV), respectively are given in Fig. 5. The collected information was stored in a database and used for building an empirical model employing multiple regression analysis. In order to predict the ultimate tensile strength of carbon steels, the following key input parameters were considered: carbon content (C), and the eddy current responses, resistive voltage ($V_R$), inductive voltage ($V_L$), and total voltage ($V_T$). The carbon concentration configures the main microstructural parameter determining the phase balance and morphology of the steels, and thus their mechanical properties.

The mathematical model for predicting ultimate tensile strengths ($\sigma_{UTS}$) of ferrite-pearlite steel wires of 4 mm in diameter was built as given:

$$\sigma_{UTS} = a_1 + a_2\, C + a_3\, V_R + a_4\, V_L - a_5\, V_T$$
$$+ a_6\, V_R V_L - a_7\, V_R V_T \qquad (7)$$

where the ultimate tensile strength is in $N/mm^2$, the carbon content in % weight, and the eddy current outputs in volts. The model variables $a_1$ to $a_7$ were obtained by means of multilinear regressions and depend on the diameter and composition of the steel wire. The relationship between strength and model variables is statistically significant ($p<0.001$), and the coefficient of determination $R^2$ indicates that the model can explain 99.73% of the variations in strength.

Next, the empirical model was used to directly estimate the strengths by eddy current of additional patented wires of AISI 1065, 1080, and 1085 steels of 4 mm in diameter. Samples were also collected for performing conventional tensile tests according to ASTM E8. The average experimental and predicted $\sigma_{UTS}$ values are presented in Table 3.

In order to obtain online prediction of tensile properties, for instance the tensile strength, the invention was carried out as follows:

-    selecting in the database 106 as reference the eddy current values previously measured corresponding to the target properties

- measuring online with a magnetic sensor 102 the magnetic properties of the patented wire
- comparing the measured signal with the reference and using the calculation unit 106 to predict the tensile strength. The calculation unit is a computer assisted model.

Table 3: Empirical and predicted ultimate tensile strengths of ferrite-pearlite steels wires of 4 mm in diameter

| AISI Steel | Austenitization/ Transformation Temperature (°C) | Experimental | Mathematical model | | |
|---|---|---|---|---|---|
| | | Ultimate tensile | Ultimate tensile | 95% confidence interval | |
| | | strength (N/mm$^2$) | strength (N/mm$^2$) | Lower bound | Upper bound |
| 1065 | 950/ 540 | 1125 ± 1 | 1122 ± 7 | 1107 | 1136 |
| 1065 | 950 / 580 | 1050 ± 2 | 1045 ± 4 | 1038 | 1053 |
| 1065 | 950 / 640 | 937 ± 1 | 929 ± 4 | 921 | 938 |
| 1080 | 950 / 540 | 1273 ± 2 | 1274 ± 6 | 1261 | 1287 |
| 1080 | 950 / 580 | 1202 ± 1 | 1201 ± 4 | 1192 | 1209 |
| 1080 | 950 / 640 | 1078 ± 1 | 1083 ± 5 | 1073 | 1092 |
| 1085 | 950 / 540 | 1331 ± 1 | 1344 ± 8 | 1327 | 1360 |
| 1085 | 950 / 580 | 1258 ± 1 | 1257 ± 6 | 1244 | 1270 |
| 1085 | 950 / 640 | 1110 ± 1 | 1113 ± 6 | 1101 | 1126 |

**Claims**

1. A device for in-line monitoring the microstructure variations of a thermally processed steel wire at temperatures below 100 °C, the device comprising:

   - a magnetic sensor;
   - a reference unit;
   - a calculation unit;

   the magnetic sensor adapted to be positioned around the thermally processed steel wire and comprising a first induction coil to generate an electromagnetic signal and a second induction coil to receive an electromagnetic signal as currently measured value;
   the reference unit containing or producing a set of reference measured values of thermally processed reference steel wire samples with fully identified room temperature microstructure;
   a calculation unit able to make a difference between the currently measured value and the reference measured values in order to return type and amplitude of microstructure deviation from the reference steel wire.

2. A device according to claim 1, wherein said reference unit is a second magnetic sensor comprising a third induction coil to generate a reference electromagnetic signal and a fourth induction coil to receive the reference magnetic signal, in which a non-moving reference sample of known microstructure is placed.

3. A device according to claim 1, wherein said reference unit is a database.

4. A device according to any one of the preceding claims, wherein said calculation unit is a computer assisted model to predict the amplitude and type of any microstructure variation from the difference between the currently measured value and the reference measured values.

5. A device according to claim 4, in which the computer assisted model is also able to predict tensile strength variation from the difference between the currently measured value and the reference measured values.

6. A method for in-line monitoring the microstructure variations of a thermally processed steel wire comprising the steps of:

- Measuring a magnetic signal generated by a steel wire being thermally processed
- Measuring a magnetic signal of a non-moving steel wire of known microstructure
- Comparing the magnetic signal variation between the processed wire and the non-moving reference sample
- Calculating the type and amplitude of microstructure variation by means of a computer assisted model built from a database containing a set of measured values obtained with the magnetic sensor for wire samples with known microstructure

7. The use of a device according to any one of the preceding claims 1 to 5 in a wire patenting process

8. The use of a device according to any one of the preceding claims 1 to 5 in a wire quenching and tempering process

9. The use of a device according any one of the preceding claims 1 to 5 in a wire annealing process

Fig. 1

Fig. 2

Fig. 3

Fig. 4

Fig. 5

Europäisches
Patentamt

European
Patent Office

Office européen
des brevets

## EUROPEAN SEARCH REPORT

Application Number

EP 21 18 0597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/228692 A1 (CENTRE DE RECHERCHES METALLURGIQUES ASBL CENTRUM VOOR RES IN DE METALL) 5 December 2019 (2019-12-05) | 1-4,6 | INV.<br>G01N27/80<br>G01N27/9013 |
| Y | * the whole document * | 7-9 | |
| Y | EP 0 195 473 A1 (BEKAERT SA NV [BE]) 24 September 1986 (1986-09-24)<br>* abstract *<br>* page 1, line 3 - line 15 * | 7-9 | |
| X | US 6 164 105 A (LAVERROUX MICHEL [FR] ET AL) 26 December 2000 (2000-12-26)<br>* abstract *<br>* figures *<br>* column 2, lines 8-17 *<br>* column 2, line 61 - column 7, line 31 * | 1,3-6 | |
| A | US 2019/145932 A1 (FENG LANG [US] ET AL) 16 May 2019 (2019-05-16)<br>* claims * | 1-9 | |

TECHNICAL FIELDS
SEARCHED      (IPC)

G01N
C21D

The present search report has been drawn up for all claims

| Place of search | Date of completion of the search | Examiner |
|---|---|---|
| Munich | 24 November 2021 | Ruchaud, Nicolas |

## ANNEX TO THE EUROPEAN SEARCH REPORT
## ON EUROPEAN PATENT APPLICATION NO.

EP 21 18 0597

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2021

| Patent document cited in search report | | Publication date | Patent family member(s) | | Publication date |
|---|---|---|---|---|---|
| WO 2019228692 | A1 | 05-12-2019 | BE | 1025588 A1 | 18-04-2019 |
| | | | CA | 3102180 A1 | 05-12-2019 |
| | | | EP | 3803368 A1 | 14-04-2021 |
| | | | JP | 2021526655 A | 07-10-2021 |
| | | | KR | 20210016412 A | 15-02-2021 |
| | | | US | 2021164957 A1 | 03-06-2021 |
| | | | WO | 2019228692 A1 | 05-12-2019 |
| EP 0195473 | A1 | 24-09-1986 | AT | 48444 T | 15-12-1989 |
| | | | AU | 591652 B2 | 14-12-1989 |
| | | | BR | 8600916 A | 11-11-1986 |
| | | | CA | 1270427 A | 19-06-1990 |
| | | | CN | 86101334 A | 19-11-1986 |
| | | | CZ | 281967 B6 | 16-04-1997 |
| | | | DD | 250550 A5 | 14-10-1987 |
| | | | EP | 0195473 A1 | 24-09-1986 |
| | | | ES | 8703528 A1 | 16-02-1987 |
| | | | IN | 166412 B | 05-05-1990 |
| | | | JP | S61276938 A | 06-12-1986 |
| | | | KR | 860007391 A | 10-10-1986 |
| | | | SK | 280378 B6 | 10-12-1999 |
| | | | SU | 1500167 A3 | 07-08-1989 |
| | | | TR | 22844 A | 22-08-1988 |
| | | | ZA | 861595 B | 29-10-1986 |
| US 6164105 | A | 26-12-2000 | EP | 0947830 A1 | 06-10-1999 |
| | | | FR | 2775786 A1 | 10-09-1999 |
| | | | US | 6164105 A | 26-12-2000 |
| US 2019145932 | A1 | 16-05-2019 | CN | 111480072 A | 31-07-2020 |
| | | | EP | 3710824 A1 | 23-09-2020 |
| | | | JP | 2021502559 A | 28-01-2021 |
| | | | KR | 20200086675 A | 17-07-2020 |
| | | | US | 2019145932 A1 | 16-05-2019 |
| | | | WO | 2019094173 A1 | 16-05-2019 |

EPO FORM P0459

For more details about this annex : see Official Journal of the European Patent Office, No. 12/82

**REFERENCES CITED IN THE DESCRIPTION**

**Patent documents cited in the description**

- EP 0177626 A1
- GB 2490393 A
- US 20190292624 A1